# EUROPÄISCHE PATENTANMELDUNG

(11) **EP 0 601 453 A2**
(43) Veröffentlichungstag der Anmeldung: **15.06.1994**
(21) Anmeldenummer: 93119343.7
(22) Anmeldetag: 01.12.1993
(51) Int. Cl.: C01F 7/42, C01F 7/30, C09K 3/14, C04B 35/10, C08K 3/22, B01J 21/04

(54) **Verfahren zur Herstellung von Aluminiumoxid-Teilchen, ein nach diesem Verfahren hergestelltes Aluminiumoxid-Pulver sowie dessen Verwendung**

(30) Priorität: 10.12.1992 DE 4241625
(71) Anmelder: VEITSCH-RADEX AKTIENGESELLSCHAFT FÜR FEUERFESTE ERZEUGNISSE, A-1040 Wien (AT); Treibacher Chemische Werke Aktiengesellschaft, A-9330 Treibach (AT)
(72) Erfinder: Riepl, Karl, Dr., A-8010 Graz (AT); Mosser, Jakob, Dipl.-Ing., A-8700 Leoben/Göss (AT); Skale, Franz, Dr., A-9500 Villach (AT); Zeiringer, Hans, A-9321 Kappl (AT)
(74) Vertreter: Becker, Thomas, Dr., Dipl.-Ing.

(57) **Zusammenfassung**

Verfahren zur Herstellung von Aluminiumoxid-Teilchen, ein nach diesem Verfahren hergestelltes Aluminiumoxid-Pulver sowie dessen Verwendung. Das Verfahren zur Herstellung von sinteraktiven, weitestgehend sphärischen Aluminiumoxid-Teilchen mit einem mittleren Teilchendurchmesser <1,0µm, vorzugsweise <0,5µm, umfaßt folgende Schritte:
1.1 Einbringen eines Aluminiumträgers, wie metallisches Aluminium oder Aluminiumoxid in ein Ofenaggregat,
1.2 Erwärmung des Aluminiumträgers,
1.3 Reduktion des Aluminiumträgers, soweit nicht als metallisches Aluminium eingebracht, zu metallischem Aluminium und/oder Aluminiumcarbiden,
1.4 Erhöhung der Ofentemperatur auf einen Wert, bei dem das metallische Aluminium bzw. die Aluminiumcarbide verdampfen,
1.5 anschließende Oxidation des metallischen Aluminiums bzw. seiner Carbide zu Aluminiumoxid im Gasstrom und
1.6 Einleitung des Gasstroms in einen Filter, wobei
1.7 die Temperatur, Atmosphäre und Verweilzeit der Aluminiumoxid-Teilchen im Gasstrom entsprechend der gewünschten Teilchengröße eingestellt wird.

## Beschreibung

Die Erfindung betrifft ein Verfahren zur Herstellung von sinteraktiven, weitestgehend sphärischen Aluminiumoxid-Teilchen mit einem mittleren Teilchendurchmesser < 1,0 µm, ein nach diesem Verfahren hergestelltes Aluminiumoxid-Pulver sowie dessen Verwendung.

Aluminiumoxid-Pulver finden als Pigmente, Schleif- und Poliermittel, in feuerfesten oder feuerbeständigen Erzeugnissen, in der Keramik, als Katalysatorwerkstoff oder als Füllstoff sowie für Beschichtungen Anwendung.

Ausschlaggebend für die technische Verwendung von Aluminiumoxid sind seine chemische Beständigkeit, gute mechanische Festigkeiten, insbesondere ein günstiges Verschleißverhalten, der hohe elektrische Widerstand und die gute Temperaturbeständigkeit. Zudem ist Aluminiumoxid nicht toxisch.

Für die Herstellung hochwertiger keramischer, insbesondere feuerfester Erzeugnisse werden vor allem folgende Eigenschaften gefordert:
- hohe Sinteraktivität (insbesondere durch geringe Korngrößen)
- Minimierung der den Sinterprozeß hemmenden oder ein unerwünschtes Kornwachstum fördernden Verunreinigungen,
- möglichst geringe Gehalte an schmelzphasenbildenden Begleitstoffen,
- gute Verarbeitbarkeit (Preßbarkeit),
- hohe Gründichte.

Zur Erreichung hoher Grünstandsfestigkeiten (Gründichten) ist auch eine geringe Porosität der einzelnen Teilchen (Pulverteilchen) erforderlich.

Es sind eine Reihe thermischer, naßchemischer, mechanischer und physikalischer Verfahren zur Herstellung von sinteraktiven, mikrokristallinen Al₂O₃-Teilchen und Pulvern bekannt.

Dazu gehören die thermische Zersetzung und nachfolgende Calcination von gereinigtem Alaun (Ammonium-Aluminiumsulfat) oder die thermische Zersetzung von Aluminiumchlorid nach dem sogenannten Sprührostverfahren. Die Nachteile bei derartigen thermischen Umsetzungen von Aluminiumsalzen liegen in einem hohen Preis für die entsprechenden Anlagen und den im Oxid zurückbleibenden Salzresten, die zu einem erhöhten Kornwachstum während des Sinterprozesses beitragen können.

Zur Herstellung von feinteiligem Aluminiumoxid ist es auch bekannt, eine nach dem sogenannten Bayer-Verfahren hergestellte Tonerde aufzumahlen. Diese Feinmahlung ist jedoch sehr aufwendig und um so langwieriger, je feiner das Material aufgemahlen werden soll, so daß sich Teilchen unter 1 µm - falls überhaupt - nur mit einem extremen technischen Aufwand herstellen lassen. Die Morphologie der so hergestellten Pulverteilchen ist außerdem splittrig-körnig. Dies kann Nachteile im rheologischen Verhalten verursachen.

Aus der US-A-4,818,515 ist die Herstellung von sphärischen Al₂O₃-Teilchen in einem Verfahren bekannt, bei dem wasserhaltiges Aluminiumoxid einer speziellen, mehrstufigen, thermischen Behandlung unterzogen wird. Das Verfahren verlangt einen Ausgangsstoff, der aufgrund der erforderlichen Reinheit nur unter erheblichen Kosten herstellbar ist.

Schließlich lassen sich durch Hydrolyse von Aluminiumalkoxiden feinteilige Calcinate herstellen, die jedoch je nach Calcinationsgrad eine zum Teil erhebliche Mikroporosität aufweisen, was in einem anschließenden Sinterprozeß zu einer entsprechenden (unerwünschten) Schwindung führt.

Die genannten Verfahren haben sich deshalb aus technischen und wirtschaftlichen Gründen für viele Masseanwendungen nicht durchgesetzt.

Der vorliegenden Erfindung liegt danach die Aufgabe zugrunde, ein Verfahren anzubieten, das auf relativ kostengünstige Weise die Herstellung sehr feiner Aluminiumoxid-Teilchen im Submikronbereich (< 1,0 µm) ermöglicht, wobei eine weitestgehend sphärische Kornform, eine geringe Porosität und damit gute Verdichtungs- und Sintereigenschaften angestrebt sind, um die Anwendung für die eingangs genannten Zwecke zu ermöglichen beziehungsweise zu optimieren.

Dieses Ziel wird durch ein Verfahren der eingangs genannten Art erreicht, das sich durch folgende Schritte auszeichnet:
- Einbringen eines Aluminiumträgers wie Al oder Al₂O₃ in ein Ofenaggregat,
- Erwärmung des Aluminiumträgers,
- Reduktion des Aluminiumträgers, soweit er nicht als metallisches Aluminium eingebracht ist, zu metallischem Aluminium und/oder Aluminiumcarbiden (einschließlich Aloxicarbiden)
- Erhöhung der Ofentemperatur auf einen Wert, bei dem das metallische Aluminium bzw. die Aluminiumcarbide verdampfen,
- anschließende Oxidation des metallischen Aluminiums bzw. seiner Carbide zu Aluminiumoxid im Gasstrom und
- Einleitung des Gasstromes in einen Filter, wobei
- die Temperatur, Atmosphäre und Verweilzeit der Aluminiumoxid-Teilchen im Gasstrom entsprechend der gewünschten Teilchengröße eingestellt wird.

Ausgehend von beispielsweise stückigem Aluminiumoxid wird dieses also zunächst zu metallischem Aluminium und/oder Aluminiumcarbiden reduziert, diese danach bzw. parallel verdampft und schließlich auf geeignete Weise reoxidiert, bevor die so sekundär gebildeten Aluminiumoxid-Teilchen in einem Filter abgeschieden werden.

Dabei kommt es zur Erreichung der aufgabengemäß formulierten Feinteiligkeit der Aluminiumoxid-Partikel ganz wesentlich darauf an, die im Gasstrom geführten Al₂O₃-Teilchen im Gasstrom in den anschließenden Filter zu führen. Je kürzer die Verweildauer der Al₂O₃-Teilchen im Gasstrom ist, um so geringer ist die Partikelgröße, die sekundär auch über die Temperatur und (oxidierende) Atmosphäre des Gasstroms gesteuert werden kann.

Zur Erzielung möglichst feinteiliger Al₂O₃-Teilchen wird der Filter demzufolge unmittelbar an die vorstehend beschriebene Oxidationsstufe angeschlossen.

Als Ofenaggregat hat sich ein elektrischer Lichtbogenofen als besonders vorteilhaft erwiesen. Dieser wird nach einer Ausführungsform der Erfindung mit Stromdichten zwischen 10 und 50 A/cm², im bevorzugten Bereich zwischen 15 und 30 A/cm² betrieben.

Zur Erhöhung der wirksamen Verdampfungsleistung hat sich die Zugabe eines Reduktionsmittels (wie Kohlenstoff) bei der Reduktionsreaktion von Aluminiumoxid zu Aluminium, Aluminiumcarbid oder Aluminiumoxicarbid als vorteilhaft erwiesen. Auch kohlenstoffabgebende Verbindungen können in diesem Sinne verwendet werden.

Die anschließende Oxidation des dampfförmigen Aluminiums und/oder kondensierter Aluminiumteilchen kann durch externe Sauerstoffzufuhr beschleunigt werden. Hierdurch wird es möglich, bei nur kurzer Verweilzeit der Teilchen in der Oxidationsstufe diese anschließend sofort in einem geeigneten Filter, beispielsweise einem Schlauchfilter, abzuscheiden.

Alternativ kann die Oxidationsstufe so ausgebildet sein, daß Aluminiumteilchen in einen Ofenabschnitt geführt wird, bei dem eine oxidierende Atmosphäre besteht.

Mit dem beschriebenen Verfahren lassen sich sinteraktive sphärische Aluminiumoxid-Teilchen mit einer Dichte bis 3,97 g/cm³ und einer spezifischen Oberfläche zwischen 0,5 und 60 m²/g herstellen.

Das Verfahren ermöglicht die Bildung von Aluminiumoxid-Teilchen mit einer mittleren Teilchengröße deutlich unter 1 µm, durch entsprechende Einstellung der Verfahrensparameter wie Temperatur, Atmosphäre und Verweilzeit der Al₂O₃-Teilchen im Gasstrom sogar herunter bis 0,10 µm.

Ein besonderer Vorteil besteht darin, daß die nach dem beschriebenen Verfahren herstellten Al₂O₃-Teilchen eine nahezu ideale sphärische (kugelförmige) Konfiguration aufweisen, so daß sich das Material besonders vorteilhaft zum Beispiel für Schleif- und Poliermittel oder in feuerfesten keramischen Werkstoffen (dort auch als Bindemittel bzw. Bindemittelkomponente) einsetzen läßt. Die Kugelform ist maßgeblich dafür verantwortlich, daß die Teilchen zu hervorragenden rheologischen Eigenschaften entsprechender Systeme beitragen.

Bei Verwendung eines Elektro-Lichtbogenofens kann das Aufgabegut ohne weiteres in stückiger Form vorliegen. Dabei ist die Verdampfungsleistung des auftretenden Lichtbogens von seinem Energieinhalt und der lokalen Lichtbogentemperatur abhängig. Bei Stromdichten im Bereich von 10 bis 50 A/cm² liegt die Verdampfungsleistung im Bereich zwischen 40 und 100 g Al₂O₃/kwh.

Die Zusammensetzung der nach dem Verfahren erhaltenen Al₂O₃-Teilchen ist abhängig vom eingesetzten aluminiumhaltigen Rohstoff (Aluminiumträger) und dem verwendeten Reduktionsmittel. Enthalten der Rohstoff und/oder das Reduktionsmittel Alkali- und/oder Erdalkalioxide, SiO₂, Eisenoxid oder dergleichen, so sind diese Verunreinigungen nahezu quantitativ im Endprodukt wiederzufinden. Bei Verwendung von Kohlenstoff als Reduktionsmittel, zum Teil aber auch durch Kohlenstoff aus den Elektroden des Ofens werden geringe Mengen Kohlenstoff freigesetzt oder es werden Carbide oder Oxicarbide gebildet. Im Endprodukt sind dann, falls die Reoxidation nicht vollständig abläuft, geringe Kohlenstoffgehalte bis zu etwa 0,5 Gew.-% möglich, die durch thermische Nachbehandlung (zum Beispiel eine Glühbehandlung) bei Bedarf weiter reduziert werden können.

Die Erfindung wird nachstehend anhand eines Ausführungsbeispieles näher beschrieben:
In einen Elektrolichtbogenofen mit Graphit-Elektroden wird ein Gemisch aus 85 Gew.-Teilen stückigem Aluminiumoxid und 15 Gew.-Teilen Graphitgrieß eingebracht. Nach Zünden des Lichtbogens bildet sich anfangs ein Schmelzsumpf aus Aluminiumoxid, Al₄O₄C und Al₄C₃, der als Schutzschicht für die Bodenzustellung des Ofens (die hier aus Kohlenstoffsteinen besteht) vorteilhaft ist. Die Leistung des Lichtbogens liegt im Bereich zwischen 150 und 180 kVA. Die Stromdichte beträgt zwischen 16 und 23 A/cm².

In der Folge kommt es zu einer Verdampfung des stückigen Ausgangsgutes unter Bildung von metallischem Aluminium und Aluminiumcarbiden, welche danach an Atmosphäre oder durch Sauerstoffzufuhr zu Al₂O₃-Teilchen reoxidiert werden, bevor diese in einen Gewebefilter eingeleitet werden, wo sie sich zu über 99 Gew.-% abscheiden. Die durchschnittliche Größe der erhaltenen, überwiegend sphärischen Aluminiumoxid-Pulverteilchen liegt bei 0,2 µm. Die Dichte des Materials beträgt 3,8 g/cm³. Die spezifische Oberfläche liegt bei 9,8 m²/g.

Bei einer Zusammensetzung des Al₂O₃-Einsatzgutes von
0,03 Gew.-% Na₂O + K₂O
0,014 Gew.-% Fe₂O₃
0,03 Gew.-% MgO
0,03 Gew.-% SiO₂
Rest Al₂O₃
wird ein Al₂O₃-Pulver mit folgender Teilchenzusammensetzung erhalten:
0,037 Gew.-% Na₂O + K₂O
0,03 Gew.-% Fe₂O₃
0,05 Gew.-% MgO
0,08 Gew.-% SiO₂
0,37 Gew.-% C
Rest Al₂O₃.

Die Erhöhung der Verunreinigungen stammt dabei aus dem Ascheanteil des zur Reduktion verwendeten Graphits sowie den Elektroden des Ofens.

## Patentansprüche

1. Verfahren zur Herstellung von sinteraktiven, weitestgehend sphärischen Aluminiumoxid-Teilchen mit einem mittleren Teilchendurchmesser < 1,0 µm, vorzugsweise < 0,5 µm, mit folgenden Schritten:
1.1 Einbringen eines Aluminiumträgers, wie metallischem Aluminium oder Aluminiumoxid in ein Ofenaggregat,
1.2 Erwärmung des Aluminiumträgers,
1.3 Reduktion des Aluminiumträgers, soweit nicht als metallisches Aluminium eingebracht, zu metallischem Aluminium und/oder Aluminiumcarbiden,
1.4 Erhöhung der Ofentemperatur auf einen Wert, bei dem das metallische Aluminium bzw. die Aluminiumcarbide verdampfen,
1.5 anschließende Oxidation des metallischen Aluminiums bzw. seiner Carbide zu Aluminiumoxid im Gasstrom und
1.6 Einleitung des Gasstroms in einen Filter, wobei
1.7 die Temperatur, Atmosphäre und Verweilzeit der Aluminiumoxid-Teilchen im Gasstrom entsprechend der gewünschten Teilchengröße eingestellt wird.

2. Verfahren nach Anspruch 1 mit der Maßgabe, daß der Aluminiumträger in stückiger Form eingesetzt wird.

3. Verfahren nach Anspruch 1 oder 2 mit der Maßgabe, daß die Verdampfung in einem elektrischen Lichtbogenofen erfolgt.

4. Verfahren nach Anspruch 3 mit der Maßgabe, daß die Stromdichte 10 bis 50 A/cm² beträgt.

5. Verfahren nach Anspruch 4 mit der Maßgabe, daß die Stromdichte 15 bis 30 A/cm² beträgt.

6. Verfahren nach einem der Ansprüche 1 bis 5 mit der Maßgabe, daß als Reduktionsmittel Kohlenstoff oder kohlenstoffabgebende Verbindungen eingesetzt werden.

7. Verfahren nach einem der Ansprüche 1 bis 6 mit der Maßgabe, daß in der Oxidationsstufe Sauerstoff in den Gasstrom eingeblasen wird.

8. Verfahren nach einem der Ansprüche 1 bis 6 mit der Maßgabe, daß die Oxidation des dampfförmigen Aluminiums bzw. der Aluminiumcarbide zu Aluminiumoxid durch Einleiten des Aerosols in einen Ofenabschnitt mit oxidierender Atmosphäre erfolgt.

9. Verfahren nach einem der Ansprüche 1 bis 8 mit der Maßgabe, daß die Abscheidung der Aluminiumoxidteilchen in einem Schlauchfilter erfolgt.

10. Sinteraktives, weitestgehend sphärisches Aluminiumoxid-Pulver, hergestellt nach dem Verfahren nach einem der Ansprüche 1 bis 9, dadurch gekennzeichnet, daß es eine Dichte von 2,5 bis 3,97 g/cm³ und eine spezifische Oberfläche von 0,5 bis 60 m²/g aufweist.

11. Aluminiumoxid-Pulver nach Anspruch 10, dadurch gekennzeichnet, daß es eine Dichte zwischen 3,2 und 3,97 g/cm³ und eine spezifische Oberfläche zwischen 4 und 20 m²/g aufweist.

12. Aluminiumoxid-Pulver nach Anspruch 10 oder 11 mit einer mittleren Teilchengröße zwischen 0,05 und 0,3 µm.

13. Verwendung eines Aluminiumoxid-Pulvers nach einem der Ansprüche 10 bis 12 als Schleif- und Poliermittel.

14. Verwendung eines Aluminiumoxid-Pulvers nach einem der Ansprüche 10 bis 12 als Bindemittel in feuerfesten keramischen Werkstoffen.

15. Verwendung eines Aluminiumoxidpulvers nach einem der Ansprüche 10 bis 12 als Füllstoff.

16. Verwendung eines Aluminiumoxidpulvers nach einem der Ansprüche 10 bis 12 als Katalysatorwerkstoff.
